# EUROPEAN PATENT APPLICATION

(11) **EP 2 803 824 A1**
(43) Date of publication of application: **19.11.2014**
(21) Application number: 13168055.5
(22) Date of filing: 16.05.2013
(51) Int. Cl.: F01D 11/00, F16J 15/06, F01D 9/04, F01D 25/24, F16J 15/08

(54) **A seal for a turbomachine and a method for construction thereof**

(71) Applicant: Siemens Aktiengesellschaft, 80333 München (DE)
(72) Inventor: Szijarto, Janos, 61295 Finspong (SE)

(57) **Abstract**

A seal (80,85) for a turbomachine and method for construction thereof is elucidated in the present invention. The seal (80,85) and the embodiments elucidated thereof is for the purpose of sealing gaps (90) between a vane (35) and a stator ring (15) of the turbomachine. The seal (80,85) comprises a first portion (93,94) and a second portion (95,96). A first sealing surface (102,104) of the first portion (93,94) contacts a stator ring surface (30) of the stator ring (15). A second sealing surface (106,108) of the second portion (95,96) contacts a vane surface (40) of the vane (35). One of the portions (95,96) is more flexible compared to the other portion (93,94). The flexible portion (95,96) conforms to the relative displacement of the vane (35) and the stator ring (15) during the operation of the turbomachine such that the aforementioned contacts for sealing are maintained.

## Description

The present invention belongs to the field of turbomachines, and particularly to a seal for a turbomachine and a method for construction of the seal.

A turbomachine, such as a gas turbine or a steam turbine, is widely used in a variety of applications involving power generation, compression of fluids, et cetera. A turbine section of the turbomachine primarily comprises a stator and a rotor. The rotor comprises an axial shaft and one or more blades. The blades are arranged annularly around the axial shaft. The stator comprises a stator ring and one or more vanes. The vanes are arranged annularly around the stator ring. The vanes assist in guiding a working fluid (such as hot gas in a gas turbine or superheated steam in a steam turbine) for the impingement of the working fluid on the blades of the rotor. The vanes are subjected to very high temperatures of the working fluid, which leads to an increase in the surface temperature of the vanes.

In order to reduce the surface temperature of the vanes and to increase the operational life span of the vanes, a coolant fluid is dispensed for cooling the vanes. The flow of the coolant fluid on the surface of the vanes causes a transfer of heat from the vane to the coolant fluid, thereby reducing the temperature of the vane. The coolant fluid is normally dispensed into a cooling channel preferably located between the vanes and the stator ring. The cooling channel is to be sealed for efficient circulation of the coolant fluid inside the cooling channel, and for preventing a leakage of the coolant fluid from the cooling channel onto other sections located upstream and/or downstream the turbine section.

However, the arrangement of the vanes around the stator ring, and the arrangement of the cooling channel between the vanes and the stator ring, can result in one or more gaps. Furthermore, due to the relative displacement of the vane and the stator ring during the operation of the turbomachine, a dilation of the existing gaps between the vane and the stator ring is experienced. The coolant fluid can leak into other sections of the turbomachine via the aforementioned gaps. Therewith, the desired cooling of the vanes is not achieved, and a reduction in the efficiency of cooling is encountered. Therefore, the aforementioned gaps are to be avoided for preventing the leakage of the coolant fluid from the cooling channel.

Presently, sealing arrangements include piston seals for sealing the aforementioned gaps. However, such sealing arrangements are stiff components and are prone to development of cracks during the relative displacement of the vane with respect to the stator ring encountered during the operation of the turbomachine. Therefore, the cracks result in the leakage of the coolant fluid, and the operation of the turbomachine is hampered due to the hereinabove stated reasons. Thus, the present sealing arrangements are not efficient and reliable means for sealing the gaps between the vanes and the stator ring.

An object of the present invention is to propose a seal for a turbomachine for efficient and reliable sealing of one or more gaps between a vane and a stator ring of the turbomachine.

The aforementioned object is achieved by a seal according to claim 1, and a method for construction of the seal according to claim 15.

The underlying object of the present invention is to propose an improved, efficient and reliable seal for sealing one or more gaps between a stator ring and the vane of a turbomachine. The seal in accordance with the present invention seals the gap between the vane and the stator ring. The vane and the stator ring oppose one another in a radial direction. The seal includes a first portion and a second portion. The first portion includes a first sealing surface, and the second portion includes a second sealing surface. The first sealing surface is adapted to contact a stator ring surface facing the vane, and the second sealing surface is adapted to contact a vane surface facing the stator ring at a first contact region. One of the portions is flexible, and the flexibility enables the movement of the flexible portion during relative displacement of the vane and the stator ring. The flexible portion is such that the contact between first sealing surface and the stator ring surface, and the contact between the second sealing surface and the vane surface are maintained even in the event of the relative displacement. Therewith, the gap between the vane and stator ring remains sealed.

In accordance with an embodiment of the present invention, the second portion is more flexible than the first portion. Herewith, the second portion is moved in accordance with the displacement of the vane. This is beneficial because the vane is subject to the impact of the working fluid in the turbomachine, and the vane is prone to the displacement caused therewith.

In accordance with another embodiment of the present invention, the second portion is angularly displaceable in accordance with the relative displacement of the vane and the stator ring. The angular displacement is such that the second sealing surface contacts a second contact region on the vane surface for sealing the gap.

In accordance with yet another embodiment of the present invention, the second portion is deformable in accordance with the relative displacement of the vane and the stator ring.

The deformation is such that the second sealing surface still contacts the first contact region for sealing the gap.

Herewith, the flexible attributes of the second portion, viz. the capability to undergo angular displacements or deformations in accordance with the relative displacement, is useful in increasing the sealing efficiency for sealing the gap between the vane and the stator ring without. The flexible attributes enable the reliable maintenance of the contacts during the relative displacements.

In accordance with yet another embodiment of the present invention, the first portion and the second portion are arranged angle 'θ' with respect to one another.

In accordance with yet another embodiment of the present invention, the first portion is annular. Furthermore, the first portion extends in a radial direction.

Herewith, an annular seal is obtained, which is beneficial in sealing the gap between the stator ring and the vane. The stator ring is normally annular, and to achieve higher sealing efficiency the first portion is designed to be annular.

In accordance with yet another embodiment of the present invention, the second portion includes a first plurality of segments. The first plurality of segments is arranged annularly around the first portion.

In accordance with yet another embodiment of the present invention, the first plurality of segments is arranged at the angle 'θ' with respect to the first portion.

In accordance with yet another embodiment of the present invention, the second portion includes a second plurality of segments. The second plurality of segments is arranged such that a segment of the second plurality of segments covers a space between the adjoining segments of the first plurality of segments.

Herewith, the second portion with enhanced flexibility is obtained. Furthermore, the sealing efficiency is also enhanced.

In accordance with yet another embodiment of the present invention, a fastening means is included for fastening the seal to the stator ring. Herewith, the first portion can be tightly retained in place such that the seal does not undergo slippage during the operation of the turbomachine.

In accordance with yet another embodiment of the present invention, the fastening means includes a tie bolt. The tie bolt is one of the simplest fastening means.

In accordance with yet another embodiment of the present invention, the first portion and the second portion are made of sheet metals. Sheet metals are beneficial in enhancing the manufacturing speed and design simplicity of the seal.

In accordance with yet another embodiment of the present invention, the Young's modulus of the first portion is different from the Young's modulus of the second portion. Herewith, by choosing different materials with differing Young's moduli, offers the choice to vary the flexibility of the portions depending on the application.

The aforementioned and other embodiments of the present invention related to a seal for a turbomachine and a method for construction thereof will now be addressed with reference to the accompanying drawings of the present invention. The illustrated embodiments are intended to illustrate, but not to limit the invention. The accompanying drawings contain the following figures, in which like numbers refer to like parts, throughout the description and drawings.

The figures illustrate in a schematic manner further examples of the embodiments of the invention, in which:
- FIG 1: depicts a cross-sectional view of a basic arrangement of a vane, a stator ring, and a sealing arrangement for a turbine section for a turbomachine,
- FIG 2: depicts a cross-sectional view of a seal comprising a flexible portion for the sealing arrangement referred to in FIG 1,
- FIG 3: depicts an angular displacement of the flexible portion referred to in FIG 2,
- FIG 4: depicts a deformation of the flexible portion referred to in FIG 2,
- FIG 5: depicts a displacement of the vane relative to the stator ring and the corresponding movement of the sealing arrangement referred to in FIG 1 upon the action of a force,
- FIG 6: depicts a perspective view of the seal referred to in FIG 2 according to an embodiment of the present invention,
- FIG 7: depicts a perspective view of the seal referred to in FIG 2 according to another embodiment of the present invention,
- FIG 8: depicts a cross-sectional view along a section VIII-VIII of the embodiment of the seal referred to in FIG 7, and
- FIG 9: depicts a flowchart of a method for construction of the seal referred to in FIG 2.

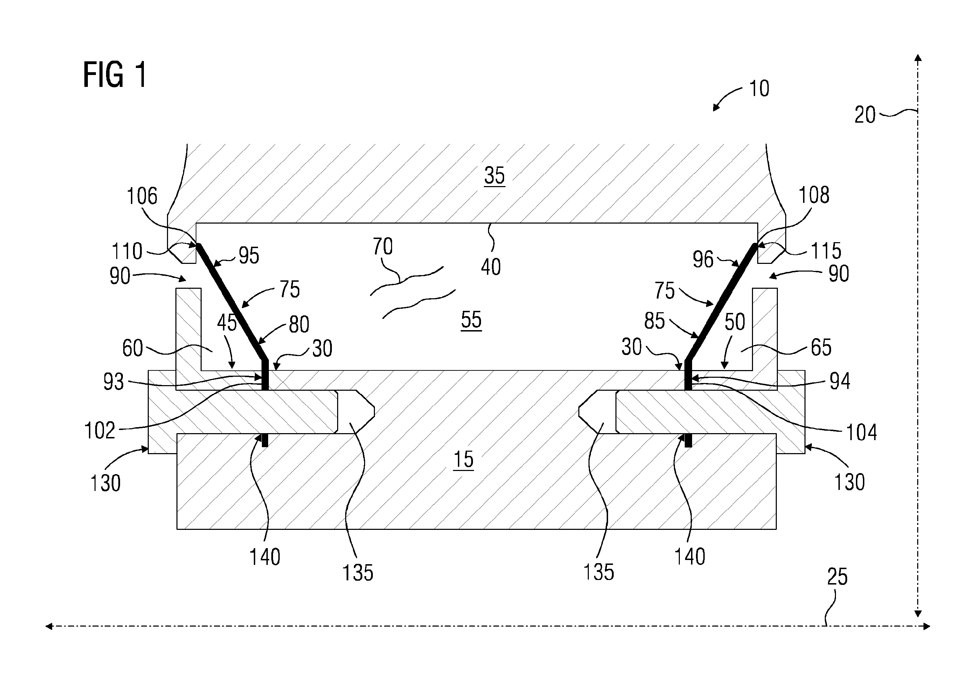

A circumferential cross-sectional view of a part of a turbine section 10 for a turbomachine (not shown) is depicted in FIG 1.

The turbine section 10 comprises a stator ring 15 and a plurality of vanes 35. The plurality of vanes 35 is arranged around the stator ring 15. The stator ring 15 is preferably annular, and the vanes 35 are arranged annularly around the stator ring 15. Furthermore, the vanes 35 are annularly arranged such that vane surfaces 40 of the respective vanes 35 and a stator ring surface 30 of the stator ring 15 are opposed to one another radially, i.e. in a radial direction as denoted by means of an arrow 20. Therewith, each of the vanes 35 and the stator ring 15 oppose one another in the radial direction 20. I.e., the vane surface 40 of the respective vane 35 opposes the stator ring surface 30 of the stator ring 15 in the radial direction 20.

Though FIG 1 depicts only one exemplary vane 35 of the plurality of the vanes 35, a person skilled in the art may appreciate the fact that the paragraphs mentioned hereinabove and the paragraphs mentioned hereinafter are also applicable and the essence thereof is understandable in the context of the plurality of such vanes 35 disposed around the stator ring 15.

It may be noted herein that the stator ring 15 and the vanes 35 also extend longitudinally, i.e. in a direction along a longitudinal axis 25 of the turbomachine. The stator ring 15 comprises a fore section 45 and an aft section 50, and the stator ring 15 extends longitudinally between the fore section 45 and the aft section 50. I.e., the fore section 45 and the aft section 50 define the longitudinal extent of the stator ring 15.

Herein, 'the longitudinal axis 25' is to be construed as 'the axis of rotation' of the turbomachine. Furthermore, it may be noted herein that the direction indicated by the arrow 20, i.e. the radial direction 20, is construed to be perpendicular to the longitudinal axis 25. The aforementioned circumferential direction is perpendicular to both the radial direction 20 and the longitudinal direction 25.

The annular arrangement of the plurality of vanes 35 around the stator ring 15 is such that a cooling channel 55 is formed between the plurality of vanes 35 and the stator ring 15. The cooling channel 55 extends annularly around the stator ring 15, i.e. in the aforementioned circumferential direction. The cooling channel 55 depicted herein is annular firstly due to the annularity of the stator ring 15, and secondly due to the annular arrangement of the vanes 35 around the stator ring 15.

Furthermore, the cooling channel 55 comprises a first periphery 60 and a second periphery 65, and the cooling channel 55 extends longitudinally between the first periphery 60 and the second periphery 65. I.e., the first periphery 60 and the second periphery 65 of the cooling channel 55 define the longitudinal extent of the cooling channel 55. It may be noted herein that the first periphery 60 is located at the fore section 45 of the stator ring 15, and the second periphery 65is located at the aft section 50 of the stator ring 15.

During the operation of the turbomachine, a coolant fluid 70 can be dispensed into the cooling channel 55 and the coolant fluid 70 can be guided to interact with the vanes 35 for cooling the vanes 35. Therewith, the cooling channel 55 and the coolant fluid 70 dispensed therein are beneficial for reducing the surface temperature of the vane 35. Therewith, the operational life span of the vane 35 can be increased.

In the annular arrangement of the vanes 35 around the stator ring 15, one or more gaps 90 are present between the vanes 35 and the stator ring 15. The gaps 90 are openings at the lateral boundaries of the cooling channel 55, and the coolant fluid 70 can tendentiously leak out of the cooling channel 55. A leakage of the coolant fluid 70 from the cooling channel 55 reduces the efficiency of cooling the vanes 35. Therefore, the gaps 90 are sealed for preventing the leakage of the coolant fluid 70 from the cooling channel 55.

In accordance with an embodiment of the present invention, a sealing arrangement 75 comprising one or more seals 80,85 is provided for sealing the aforementioned gaps 90 such that the leakage of the coolant fluid 70 from the cooling channel 55 is prevented. Herein, for the purpose of elucidation of the present invention, the sealing arrangement 75 comprising two exemplary seals 80,85, viz. a front seal 80 and a rear seal 85, is considered. It may be noted herein that the front seal 80 and the rear seal 85 are preferably annular according to an embodiment, firstly due to the annularity of the stator ring 15, secondly due to the annular arrangement of the vanes 35 around the stator ring 15, and thirdly due to the annularity of the cooling channel 55.

The front seal 80 and the rear seal 85 are preferably identical, both in terms of construction and in terms of functionality. The respective seals 80,85 are arranged circumferentially along the respective peripheries 60,65 of the cooling channel 55. I.e., the front seal 80 is arranged along the first periphery 60 of the cooling channel 55, and the rear seal 85 is arranged along the second periphery 65 of the cooling channel 55.

Each of the seals 80,85 comprises two portions, viz. a first portion 93,94 and a second portion 95,96 . For each of the seals 80,85, the respective first portion 93,94 preferably extends both radially and annularly. For each of the seals 80,85, the respective second portion 95,96 also preferably extends annularly and angularly. The first portion 93,94 and the second portion 95,96 are arranged at an angle θ with respect to one another, wherein the angle θ is preferably neither 0° nor 180°. For example, the angle θ can be 30°. Each of the respective first portions 93,94 of the respective seals 80,85 comprises a respective first sealing surface 102,104 located at respective tips of the first portions 93,94 for contacting the stator surface 30. Similarly, each of the respective second portions 95,96 of the respective seals 80,85 comprises a respective second sealing surface 106,108 located at respective tips 160 of the second portions 95,96 for contacting respective first and second contact regions 110,115 on the respective vane surface 40.

Therefore, with reference to the front seal 80 that is arranged along the first periphery 60, the first sealing surface 102 of the first portion 93 contacts the stator ring surface 30 proximal to the fore section 45, and the second sealing surface 106 of the second portion 95 contacts the first contact region 110 on the vane surface 40. The first contact region 110 is proximal to the fore section 45 of the stator ring 15. Similarly, with reference to the rear seal 85 that is arranged along the second periphery 65, the first sealing surface 104 of the first portion 94 contacts the stator ring surface 30 proximal to the aft section 50, and the second sealing surface 108 of the second portion 96 contacts a second contact region 115 on the vane surface 40. The second contact region 115 is proximal to the aft section 50 of the stator ring 15.

Therefore, the front seal 80 achieves to seal the gap 90 between the fore section 45 of the stator ring 15 and the vanes 35 at the first periphery 60 of the cooling channel 55. Similarly, the rear seal 85 achieves to seal the gap 90 between the aft section 50 of the stator ring 15 and the vanes 35 at the second periphery 65 of the cooling channel 55. Thus, the gaps 90 between the vanes 35 and the stator ring 15 are sealed by means of the sealing arrangement 75, and therewith the coolant fluid 70 is confined to the cooling channel 55.

The part of the turbine section 10 depicted in FIG 1 experiences radial and/or axial displacements during the operation of the turbomachine. I.e., the vane 35 undergoes radial and/or axial displacements relative to the stator ring 15 and vice versa. The sealing arrangement 75 according to the present invention is designed such that the leakage of the coolant fluid 70 from the cooling channel 55 is prevented even during the occurrence of the aforementioned radial and/or axial displacements. I.e., the seals 80,85 are designed such that sealing of the cooling channel 55 is achieved even during the aforementioned displacements.

In accordance with an embodiment of the present invention, the respective second portions 95,96 of the respective seals 80,85 are flexible. Therewith, the respective second portions 95,96 can undergo a radial and/or axial displacement with respect to the respective first portions 93,94. In the end, the flexibility of the second portions 95,96 allow that respective tips 160 of the respective second portions 95,96 and with it the respective second sealing surfaces 106,108 to be displaced with respect to the respective first portions 93, 94.

To elucidate the aforementioned, for example, if the vane 35 is displaced in the axial direction 25, then due to the flexibility of the respective second portions 95,96, the respective second portions 95,96 and especially the respective tips 160 of the respective second portions 95,96 with the respective second sealing surfaces 106,108 undergo a displacement in the axial direction 25 with respect to the respective first portions 93,94, such that the respective second sealing surfaces 106,108 maintain contact with the vane surface 40. Similarly, if the vane 35 is displaced in the radial direction 20, then due to the flexibility of the respective second portions 95,96, the respective second portions 95,96 and especially the respective tips 160 of the respective second portions 95,96 and the respective second sealing surfaces 106,108 undergo a displacement in the radial direction 20 with respect to the respective first portions 93,94, such the respective second sealing surfaces 106,108 maintain contact with the vane surface 40. Thus, the flexibility of the respective second portions 95,96, is beneficial in maintaining the contact between the respective second sealing surfaces 106,108 and the respective first and second contact regions 110,115 on the vane surface 40 even during the occurrence of the aforementioned axial and/or radial displacements of the vane 35 relative to the stator ring 15. In short, whatsoever the axial and/or radial displacements of the vane 35 with respect to the stator ring 15, the respective contacts between the respective second sealing surfaces 106,108 and the respective contact regions 110,115 on the vane surface 40 are maintained.

According to an embodiment of the present invention, a fastening means 130 is provided such that the respective first portions 93,94 of the respective front and rear seals 80,85 are fastened to the stator ring 15. Herewith, a tight contact between the respective first sealing surfaces 102,104 and the stator ring surface 30 is achieved. Thus, the respective contacts between the respective first sealing surfaces 102,104 and the stator surface 30 are also maintained. Thus, the aforementioned gaps 90 between the vane 35 and the stator ring 15 are sealed irrespective of the axial and/or radial displacements of the vane 35 relative to the stator ring 15. Therewith, the coolant fluid 70 is confined to the cooling channel 55 irrespective of the aforementioned displacements.

The fastening means 130 can comprise a bolt and a nut, a rivet, a clamp, and the like. However, according to an exemplary aspect, the fastening means 130 comprises one or more tie bolts. Each tie bolt 130 is inserted through a first hole 135 comprised in the stator ring 15 and also through a second hole 140 comprised in the respective first portion 93,94 of the respective seal 80,85. Thereafter, the respective tie bolt 130 is tightened such that a tight contact between the respective first sealing surface 102,104 and the stator surface 30 is achieved. Therewith, the respective first portion 93,94 is also fastened tightly to the stator ring 15.

In one embodiment of the present invention, the flexibility of the second portion 95,96 is achieved by allowing that the second portion 95,96 as a whole to be rotatable around an axis (not shown). The axis extends in the annular direction, i.e. circumferentially, and is located at the position where the respective first portion 93,94 and the respective second portion 95,96 of the respective seal 80,85 are connected to each other. A rotation of the second portion 95,96 around the axis results in a circumferential movement of the respective tip 160 of the second portion 95,96. Also, with a rotation around the axis the angle θ, at which the first portion 93,94 and second portion 95,96 of the respective seal 80,85 are arranged, will vary.

In accordance with another embodiment of the present invention, the second portion 95,96 is resilient in the axial direction 25 and therewith a deformation of the second portion 95,96 is possible. The resilience of the second portion 95,96 is attributable to its flexibility. The second portion 95,96 is also capable of being pre-stressed in the axial direction 25 according to a further embodiment of the present invention. The combination of resilience and the pre-stressing of the second portion 95,96 are beneficial for the establishment of a tight contact between the second sealing surface 106,108 and the vane surface 40.

The resilience and the pre-stressing of the second portion 95,96 are advantageous attributes if the vane 35 is to be disposed on the stator ring 15 provided with the respective seals 80,85. In such a situation, the respective second portions 95,96 of the respective seals 80,85 can be pressed for mounting the vane 35. The resilient force of the second portions 95,96 then establishes a more efficient contact between the respective second sealing surfaces 106,108 and the respective first and second contact regions 110,115 on the vane 35.

It may be noted herein that the vanes 35 are subjected to direct impacts of a working fluid of the turbomachine, i.e. the vanes 35 are subjected to high forces. Therefore, in the aforementioned embodiment, it is beneficial if the respective second portion 95,96 is relatively more flexible than the respective first portion 93,94, because a more efficient sealing of the gaps 90 between the vane 35 and the stator ring 15 is achieved.

However, without loss of generality, in an alternate embodiment, the first portion 93,94 can be more flexible compared to the second portion 95,96. Therewith, the first portion 93,94 can undergo a relatively larger radial and/or axial displacement compared to the second portion 95,96. In this modified embodiment, a suitable fastening means 130 may be provided for fastening the second portion 95,96 to the vane 35, and the relatively flexible first portion 93,94 can be resilient and capable of being pres-stressed.

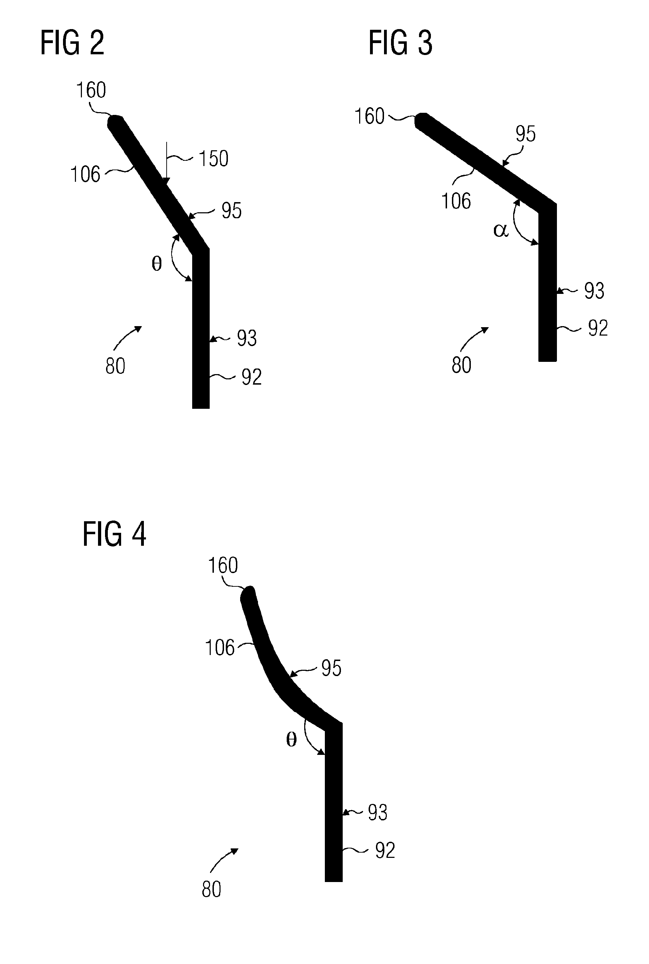

The structural design, construction, and other embodiments pertaining to the respective seals 80,85 for the aforementioned sealing arrangement 75 are explained in the paragraphs set hereinafter with reference to FIGS 2 to 8. Since the front seal 80 and the rear seal 85 are preferably identical in terms of construction and functionality, the structural design and the construction are explained only with reference to the front seal 80, and the same teachings are applicable mutatis mutandis for the obtainment of the rear seal 85. Hereinafter, 'the front seal 80' will be referred to as 'the seal 80'.

A cross-sectional view of the seal 80 comprising the first portion 93 and the second portion 95 is depicted in FIG 2.

The response of the second portion 95 to a displacement of the vanes 35 with respect to the stator ring 15 is depicted in FIG 3 and FIG 4. For the purpose of elucidation, an exemplary force 150 that can cause the aforementioned displacement is also depicted.

Reference is made herein to FIG 1 for the elucidation of FIGS 2 to 4. Furthermore, it may be noted herein that the exemplary displacement can be in radial direction, in axial direction, or in a combination thereof, which can be encountered during the operation of the turbomachine.

The flexible attribute of the second portion 95 is beneficial in maintaining the contact between the second sealing surface 106 and the vane surface 40 even during the displacement of the vane 35 relative to the stator ring 15. Herein, the flexibility of the second portion 95 can be construed either as an angular displacement of the second portion 95 as a whole with respect to the first portion 93, i.e. as a variation of the angle θ as depicted in FIG 3, or as a deformation of the second portion 95 upon the action of the force, as depicted in FIG 4. Especially in the second case, the second portion 95 is preferably resilient.

Reference is now made to FIG 2 and FIG 3 along with FIG 1. In accordance with an embodiment of the present invention, the flexibility of the second portion 95 permits angular displacement of the second portion 95 upon the action of the force on the seal 80. Herein, upon the action of the force on the seal 80, the original angle θ (the angle between the second portion 95 and the first portion 93) is changed to a new angle α. It may be noted herein that the new angle α is lesser than the original angle θ. Herein, the tip 160 of the second portion 95 is displaced to a new position due to the displacement of the second portion 95. At the new position, the second sealing surface 106 now contacts a different contact region on the vane surface 40, nevertheless sealing the gap 90 between the vane 35 and the stator ring 15. Furthermore, it may be noted herein that the new angle α is dependent on the nature of the displacement. The new angle α can be greater than the original angle θ also depending on the nature of the displacement.

Reference is now made to FIG 2 and FIG 4 along with FIG 1. In accordance with another embodiment of the present invention, the flexibility and the resilience of the second portion 95 permits the deformation of the second portion 95 upon the action of the force 150 on the seal. Herein, upon the action of the force 150 on the seal 80 due to a displacement of the vanes 35 with respect to the stator ring 15, the tip 160 of the second portion 95 still contacts the same contact region 110 on the vane surface 40. However the second portion 95 undergoes a deformation as a whole in accordance with the force 150 acting on the seal 80, thereby changing the shape of the second portion 95. Nevertheless, the gap 90 between the vane 35 and the stator ring 15 is still sealed.

According to an exemplary aspect, a combination of displacement of the second portion 95 and a deformation of the second portion 95 can also be experienced upon a displacement of the vanes 35 with respect to the stator ring 15 and the corresponding action of the force 150 on the seal 80. Herein, the tip 160 of the second portion 95 may be displaced such that the second sealing surface 106 contacts a different contact region on the vane surface 40. The gap 90 between the vane 35 and the stator ring 15 is nevertheless sealed.

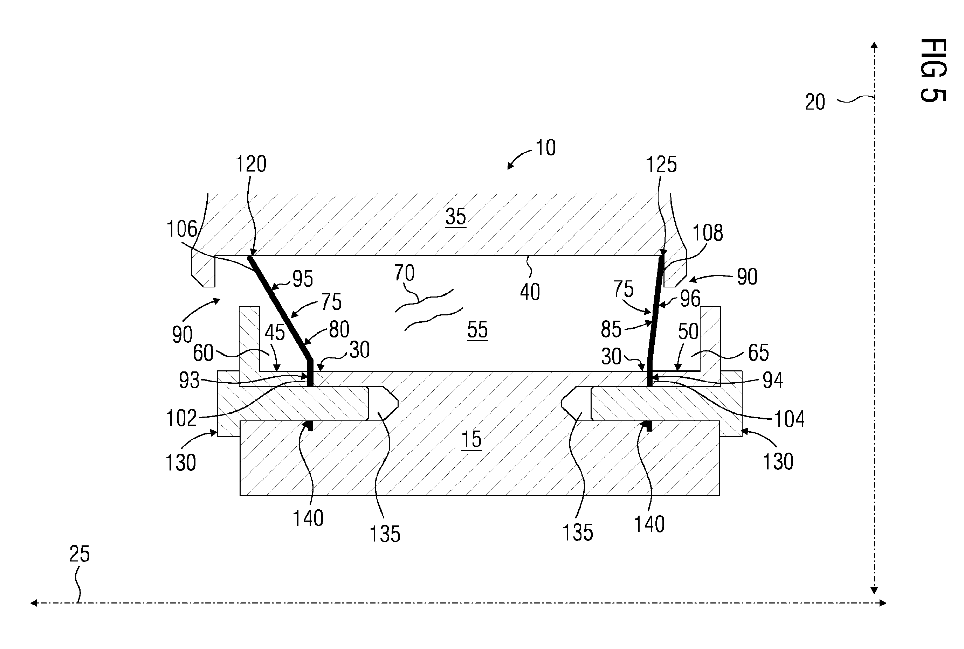

The response of the sealing arrangement 75 in accordance with the aforementioned displacement is depicted in FIG 5.

Reference is now made to FIG 5 along with the preceding figures. The upper diagram of FIG 5 corresponds to the part of the turbine section 10 without any displacement as depicted in FIG 1. The lower diagram of FIG 5 depicts the relative displacement of the vane 35 with respect to the stator ring 15 upon the action of the exemplary force 150.

It may be noted herein that due to the action of the force 150, the respective second portions 95,96 of the respective seals 80,85 undergo respective angular displacements. I.e., respective tips 160 of the respective second portions 95,96 undergo changes in positions due to the aforementioned angular displacements. Therefore, after the displacement, the tip 160 of the second portion 95 of the front seal 80 now contacts a third contact region 120, and the tip 160 of the second portion 96 of the rear seal 85 now contacts a fourth contact region 125. The third contact region 120 and the fourth contact region 125 are regions on the vane surface 40. Nevertheless, the respective angular displacements of the respective second portions 95,96 of the respective seals 80,85 are such that the gaps 90 between the vane 35 and the stator ring 15 are still sealed though the respective second sealing surfaces 106,108 of the respective seals 80,85 now contact the third contact region 120 and fourth contact region 125 respectively on the vane surface 40.

Thus, the sealing of the cooling channel 55 is still achieved even if the vanes 35 and the stator ring 15 experience relative displacements, because of the flexibility rendered to the respective seals 80,85 by the respective second portions 95,96 thereof.

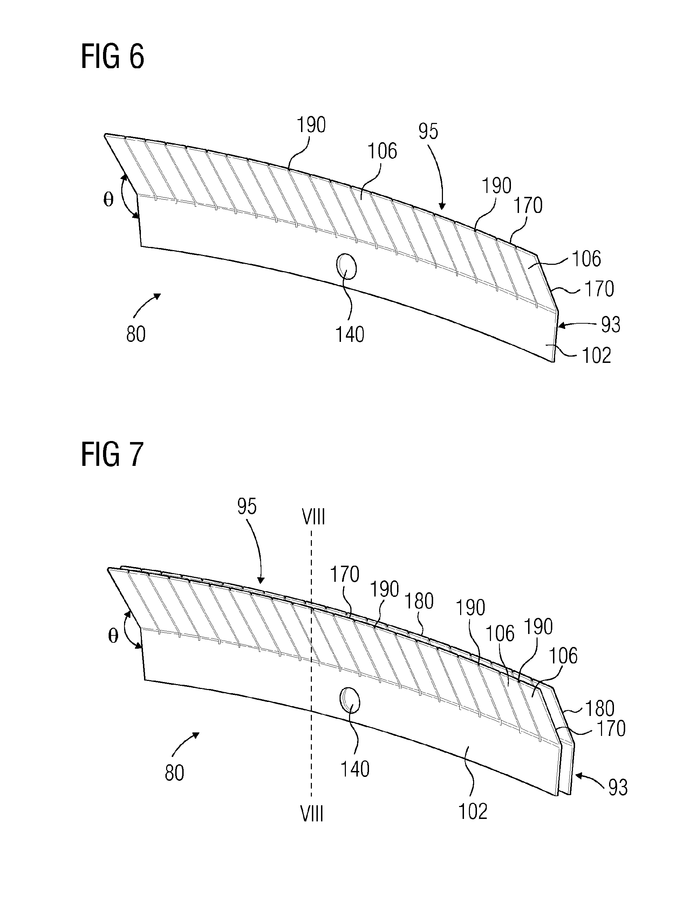

A perspective view of a portion of the seal 80 according to an embodiment of the present invention is depicted in FIG 6.

The first portion 93 forms an annular ring. The second portion 95 comprises a first plurality of segments 170, wherein the first plurality of segments 170 is arranged annularly along the first portion 93. Also, the first plurality of segments 170 is arranged such that the segments 170 are contiguous to each other. Each of the first plurality of segments 170 are arranged at the angle θ with respect to the first portion 93. Furthermore, the segments 170 are flexible therewith rendering flexibility to the second portion 95. Also, the first portion 93 comprises the aforementioned second hole 140 for facilitating the fastening of the first portion 93 to the stator ring 15.

A perspective view of a portion of the seal 80 according to another embodiment of the present invention is depicted in FIG 7.

The embodiment of the seal 80 depicted in FIG 7 is a modification of the embodiment of the seal 80 depicted in FIG 6. In this embodiment, the seal 80 further comprises a second plurality of segments 180. Each segment 180 of the second plurality of segments 180 is arranged such that a space 190 between the adjoining segments 170 of the first plurality of segments 170 is covered by a segment 180 of the second plurality of segments 180. I.e. the first and second pluralities of segments 170,180 are arranged with an annular offset, i.e. with an offset in the circumferential direction. Thus, the space 190 between the adjoining segments 170 of the first plurality of segments 170 is sealed. Additionally, each segment 180 of the second plurality of segments 180 is also arranged at the angle θ with respect to the first portion 93.

The seal 80 according to the embodiment depicted in FIG 7 can be obtained by taking two exemplary seals 80 as depicted in FIG 6 and arrange the seals 80 with the annular offset, i.e. with an offset in the circumferential direction. The offset is such that the segment 180 of the second plurality of segments 180 seals the space 190 between the contiguous segments 170 of the first plurality of segments 170.

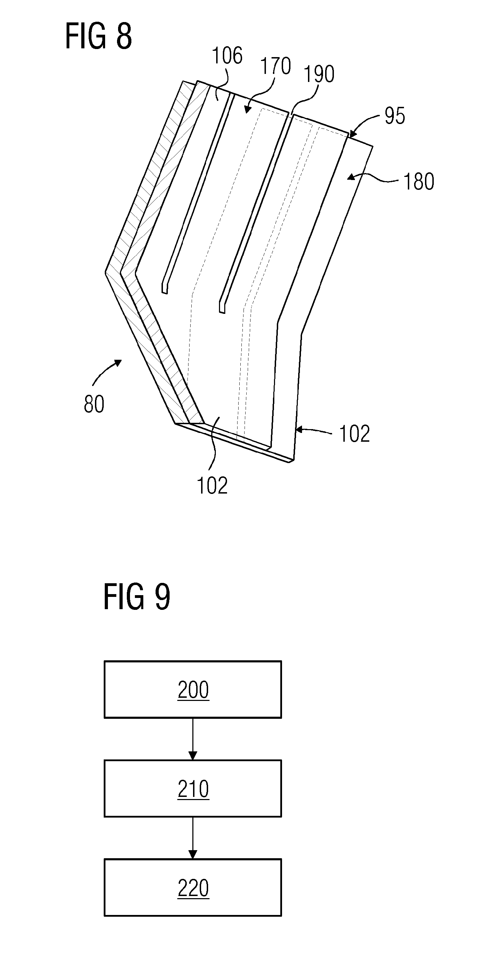

Furthermore, the second plurality of segments 180 may be affixed to the first plurality of segments 170 after the effectuation of the annular offset for obviating the mutual slippage of the first and second pluralities of segments 170,180 during the operation of the turbomachine. A cross-section of the seal 80 according to present embodiment along a section VIII-VIII is depicted in FIG 8.

The second plurality of segments 180 is also contiguous to one another according to an embodiment of the present invention. Each of the second plurality of segments 180 is also flexible. Herewith, the second portion 95 of the seal 80 now comprises the first and second pluralities of segments 170,180 fastened to one another and arranged in the aforementioned manner.

It may be noted herein that the aforementioned embodiments of the seal 80 may be realised by different techniques. According to one example, the seals 80,85 can be realised using sheet metals. The sheet metals can be cut to obtain desired shapes and profiles of the seals 80,85, for example using laser cutting. According to another example, the seals 80,85 can also be obtained by laser sintering, which is beneficial in obtaining different shapes and profiles of the seals 80,85 according to any of the aforementioned embodiments.

Furthermore, according to another aspect, the respective first portions 93,94 and the respective second portions 95,96 may be constructed out of different materials possessing different values of Young's moduli, such that the respective second portions 95,96 are more flexible compared to the respective first portions 93,94.

A flowchart of method for construction of the seal 80 is depicted in FIG 9.

In step 200, the first portion 93 and the second portion 95 are provided. In 210, the first portion 93 is arranged such that the first sealing surface 102 contacts the stator ring surface 30 facing the vane 35. In step 220, the second portion 95 is arranged such that the second sealing surface 106 contacts the vane surface 30 facing the stator ring 15. The arrangement of the first portion 93 and the second portion 95 is such that the gap 90 between the vane 35 and the stator ring 15 is sealed.

Though the present invention is explained herein with reference to an exemplary stator ring, it may be noted herein that the stator ring can be an outer stator ring or an inner stator ring of the turbomachine. A person skilled in the art may appreciate the fact that the teachings of the present invention and appropriate modifications thereto can be used for realising a seal for sealing gaps between the vane and any stator ring, wherein the stator ring can either be an outer stator ring or an inner stator ring.

Though the invention has been described herein with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the scope of the present invention.

## Claims

1. A seal (80) for sealing a gap (90) between a vane (35) and a stator ring (15) of a turbomachine, wherein the vane (35) and the stator ring (15) oppose one another in a radial direction (20), the seal (80) comprising:
- a first portion (93) comprising a first sealing surface (102) for contacting with a stator ring surface (30), wherein the stator ring surface (30) faces the vane (35), and
- a second portion (95) comprising a second sealing surface (106) for contacting with a vane surface (40) at a first contact region (110), wherein the vane surface (40) faces the stator ring (15),
wherein one of the portions (93,95) is flexible, such that the flexibility enables the movement of the flexible portion (95) during a relative displacement of the vane (35) with respect to the stator ring (15), such that the first sealing surface (102) maintains contact with the stator ring surface (30), and such that the second sealing surface (106) maintains contact with the vane surface (40).

2. The seal (80) according to claim 1, wherein the second portion (95) is more flexible compared to the first portion (93).

3. The seal (80) according to claim 2, wherein the second portion (95) is angularly displaceable in accordance with the relative displacement of the vane (35) with respect to the stator ring (15), such that the second sealing surface (106) contacts a second contact region (115) on the vane surface (40) for sealing the gap (90) between the vane (35) and the stator ring (15) after the relative displacement of the vane (35) with respect to the stator ring (15).

4. The seal (80) according to claim 2, wherein the second portion (95) is deformable in accordance with the relative displacement of the vane (35) with respect to the stator ring (15), such that the second sealing surface (106) still maintains contact with the vane surface (40) at the first contact region (110) during the relative displacement of the vane (35) with respect to the stator ring (15).

5. The seal (80) according to any of the claims 1 to 4, wherein the first portion (93) and the second portion (95) are arranged at an angle θ with respect to one another.

6. The seal (80) according to any of the claims 1 to 5, wherein the first portion (93) extends annularly, and wherein the first portion (93) also extends in the radial direction (20).

7. The seal (80) according to claim 6, wherein the second portion (95) comprises a first plurality of segments (170), wherein the first plurality of segments (170) is arranged annularly around the first portion (93).

8. The seal (80) according to claim 7, wherein each of the first plurality of segments (170) is arranged at the angle θ with respect to the first portion (93).

9. The seal (80) according to claim 8, wherein the second portion (95) further comprises a second plurality of segments (180), wherein each of the second plurality of segments (180) is arranged such that a segment (180) of the second plurality of segments (180) covers a space (190) between the adjoining segments (170) of the first plurality of segments (170).

10. The seal (80) according to any of the claims 1 to 10, further comprising a fastening means (130) for fastening the seal (80) to the stator ring (15).

11. The seal (80) according to claim 10, wherein the fastening means (130) comprises a tie bolt.

12. The seal (80) according to any of the claims 1 to 11, wherein the first portion (93) and the second portion (95) are made of sheet metals.

13. The seal (80) according to any of the claims 1 to 12, wherein the Young's modulus of the first portion (93) is different from the Young's modulus of the second portion (95).

14. A sealing arrangement (75) for sealing a gap (90) between a vane (35) and a stator ring (15) of a turbomachine, wherein a cooling channel (55) is provided between a vane surface (40) and a stator ring surface (30) for guiding a coolant fluid (70) into the cooling channel (55) for cooling the vane (35), wherein the vane (35) and the stator ring (15) oppose one another in a radial direction (20),
the sealing arrangement (75) comprising:
- a plurality of seals (80,85) according to any of the claims 1 to 13,
wherein the plurality of seals (80,85) is arranged such that a leakage of the coolant fluid (70) through the gap (90) is prevented during the relative displacement of the vane (35) with respect to the stator ring (15).

15. A method for construction of the seal (80) according to any of the claims 1 to 13, the method comprising:
- a step (200) of providing the first portion (93) and the second portion (95) for the seal (80),
- a step (210) of arranging the first portion (93) of the seal (80) such that the first sealing surface (102) contacts the stator ring surface (30) facing the vane (35), and
- a step (220) of arranging the second portion (95) of the seal (80) such that the second sealing surface (106) contacts the vane surface (40) facing the stator ring (15).
